(19) Europäisches Patentamt
European Patent Office
Office européen des brevets

(11) **EP 0 589 740 B1**

(12) **FASCICULE DE BREVET EUROPEEN**

(45) Date de publication et mention
de la délivrance du brevet:
**14.10.1998 Bulletin 1998/42**

(51) Int Cl.$^6$: **E01C 7/18**, C08L 95/00

(21) Numéro de dépôt: **93402123.9**

(22) Date de dépôt: **31.08.1993**

(54) **Procédé pour la confection d'enrobés bitumineux denses à froid stockable et de graves émulsions**

Verfahren zur Herstellung von lagerungsfähigen, kalten, bitumenumhüllten, dichten Stoffen und von schweren Emulsionen

Method for making storable cold bitumen coated dense products and heavy emulsions

(84) Etats contractants désignés:
**AT BE CH DE DK ES FR GB GR IE IT LI LU NL PT SE**

(30) Priorité: **14.09.1992 FR 9210908**

(43) Date de publication de la demande:
**30.03.1994 Bulletin 1994/13**

(73) Titulaire: **CECA S.A.**
**92800 Puteaux (FR)**

(72) Inventeurs:
• **Fabre, Jean-Claude**
**F-94220 Charenton le Pont (FR)**

• **Navascues, Luc**
**F-75011 Paris (FR)**
• **Chenevière, Pascal**
**F-64000 Pau (FR)**

(74) Mandataire: **Haicour, Philippe**
**ELF ATOCHEM S.A.,**
**Département Propriété Industrielle.**
**4-8, Cours Michelet,**
**La Défense 10**
**92091 Paris Cédex 42 (FR)**

(56) Documents cités:
DE-A- 1 941 688          FR-A- 2 623 219
GB-A- 443 666

## Description

La présente invention a trait aux enrobés bitumineux denses à froid et aux graves émulsions doués d'une certaine stockabilité.

En technique routière et dans les techniques assimilées, on désigne par enrobés des matériaux pour la construction et l'entretien des corps de chaussées et de leurs revêtements, l'exécution des travaux de voirie, le revêtement des aires de stockage, les parkings et autres travaux du même type. Ils sont composés de granulats et de liants noirs, bitumes, asphaltes ou goudrons, le cas échéant modifiés par introduction de solvants ou de polymères. On les répartit habituellement en deux catégories selon leur mode d'enrobage : les enrobés à chaud et les enrobés à froid, les premiers étant élaborés, comme leur nom l'indique, avec des matériaux portés à une température relativement élevée.

Les enrobés à froid sont apparus les premiers en date dans l'histoire des revêtements noirs, mais par la suite, ils ont été massivement supplantés par les enrobés à chaud produits en grandes centrales fixes ou mobiles. Les enrobés à froid présentent pourtant des qualités évidentes d'économie de fabrication, puisqu'on n'a pas besoin de chauffer tous leurs constituants à haute température pour leur enrobage, et que leur mise en place n'est pas soumise au respect strict des températures de répandage et de compactage. Mais ils exigent un soin particulier dans le choix de leurs constituants, et se prêtent mal à la réalisation de formules à forte compacité; ils sont aussi ou très sensibles à la déformation sous l'influence du trafic quand ils font appel à des liants fluxés, ou insuffisamment stockables quand ils sont réalisés avec des liants purs; la rusticité de leur mise en oeuvre même a été un frein à leur exploitation à l'échelle des chantiers de travaux publics. Malgré certaines de leurs qualités indéniables, ils sont demeurés des matériaux marginaux.

Parmi les enrobés à froid, on distingue communément les enrobés ouverts à froid, à pourcentage de vide supérieur à 15 %, les enrobés semi-denses à froid, à pourcentage de vide compris entre 10 et 15 %, et les enrobés denses à froid, à pourcentage de vide inférieur à 10 %. Pour ces derniers, auxquels s'adresse plus particulièrement la présente invention, il est exclu d'utiliser des liants fluxés à l'aide de solvants volatils; l'évaporation du solvant serait compromise du fait de la forte compacité de l'enrobé en place, et il en résulterait immanquablement un sévère orniérage sous le trafic. Aussi s'est-on depuis longtemps intéressé à leur obtention à partir d'émulsions de liants noirs non fluxés à l'aide de solvants volatils (avec une préférence, pour les liants dureté moyenne ou faible, vers ceux qui sont obtenus à partir de résidus peu visqueux de distillation atmosphérique, par opposition à ceux qui sont reformulés à partir de résidus visqueux et d'huiles).

La fabrication des enrobés à l'émulsion et des graves-émulsions semble tenir d'un compromis impossible à réaliser Il faut en effet réaliser d'abord un enrobage correct, c'est-à-dire qu'à un moment qui précède forcément leur mise en place, l'émulsion doit s'être séparée en liant qui aura enrobé la quasi totalité de la surface des granulats, et en eau qui devra finalement s'évacuer du revêtement compacté Il y a donc d'une part un problème de stabilité minimum de l'émulsion à l'enrobage eu égard à la forte surface spécifique des granulats, et d'autre part ur problème de délai de maniabilité à l'enrobage et à la mise en place. Toutes ces opérations se déroulent à température ambiante. La viscosité du liant à cette température doit être assez forte pour que l'enrobé compacté résiste correctement à l'orniérage sous trafic; cette condition est incompatible avec l'exigence d'une viscosité du liant assez basse pour que soit assurée la maniabilité du système, tant au malaxage qu'à la reprise après stockage éventuel et à la mise en oeuvre sous l'action des engins qui opèrent sa mise en place et son compactage.

Les solutions retenues par l'art antérieur ne s'appliquent qu'à des cas particuliers très précis. On a rencontré par exemple l'enrobage de granulométries ouvertes exécuté successivement avec deux émulsions tel que divulgué dans le brevet US 5,114,483, ou encore dans la demande internationale WO 88/03157. Ont été également divulguées des techniques d'enrobage séparé des parties fines et grossières de la granulométrie (voir par exemple le brevet français FR-A-2623219 qui préconise d'enrober à l'émulsion la partie 2/D mm de la granulométrie, puis de compléter la formule par addition dans le malaxeur de la fraction 0/2 mm préalablement enrobée; ou encore la demande PCT W09309295 qui recommande l'enrobage à l'émulsion de bitume mou du mélange des gros éléments préenrobés à l'émulsion de bitume dur et des éléments fins). De tels procédés sont de réalisation très délicate, et leur transposition à la réalisation d'enrobés denses à froid à base de liant non fluxés délivre des produits dont la stockabilité est illusoire. On connaît ainsi les enrobés "LEBON", enrobés denses à froid de réparation (bouchage des nids de poules) ou de réalisation de travaux de petits volumes, dénués de stockabilité, et en tant que tels, exécutés à l'émulsion de bitume non fluxé dans une machine porteuse de son malaxeur et fonctionnant à proximité immédiate de l'ouvrage à réaliser (voir J. - F. Lafon, Enrobés à froid traités à l'émulsion de bitume répandus en couche continue, Bull. Liaison Labo P.& Ch., 136, mars-avril 1985, réf. 2982).

On connaît aussi (DE-A-1941688) un mode de réalisation de coulis bitumineux dont on durcit le produit final par introduction, dans le coulis, d'une part de bitume dur sous forme pulvérulente, mais il sagit ici d'une technique d'enrobés coulés s'adressant plus particulièrement aux revêtements d'entretien minces, et non pas à la production des enrobés à froid de l'invention.

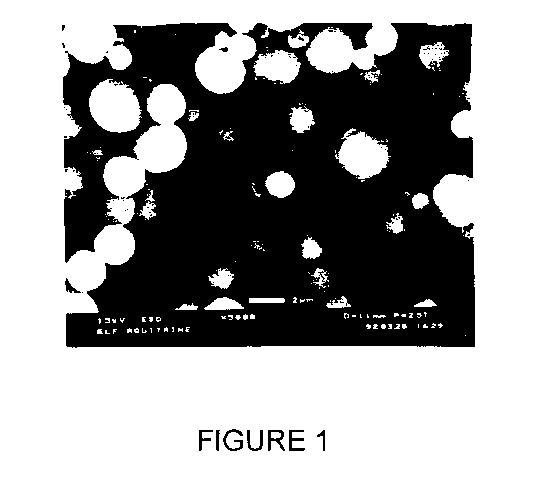

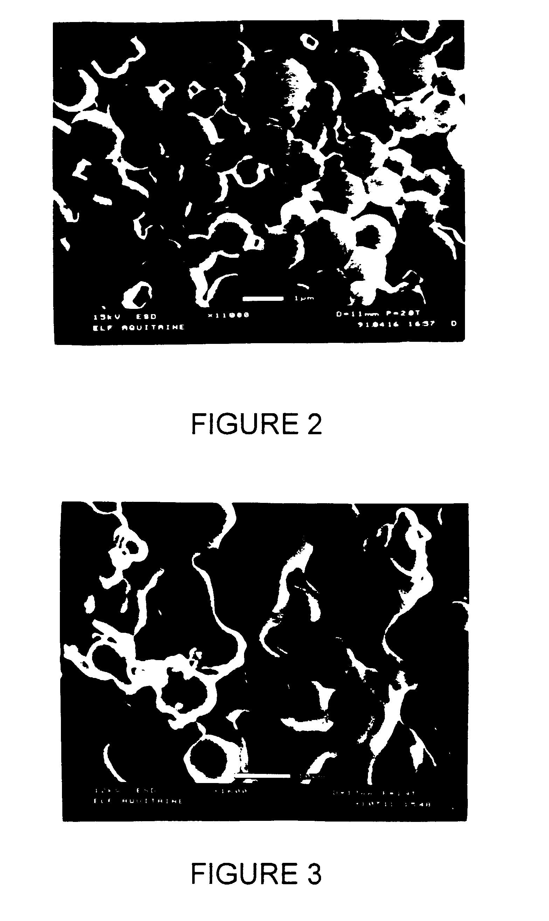

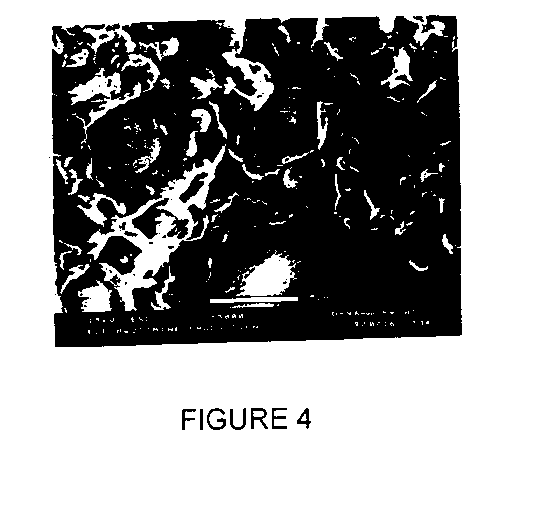

La présente invention est basée sur une propriété reconnue par P. Lechter (GB 443.666), mais dont l'application aux enrobés denses à froid stockables et aux produits apparentés s'est faite attendre pendant plus de cinquante années, de certaines émulsions bitumineuses ou similaires. On sait que la rupture d'une émulsion libère un liant qui n'atteint pas immédiatement sa cohésion intrinsèque. Cette rupture est un phénomène dynamique qui fait passer le bitume de l'état de dispersion à celui de film continu par rapprochement des particules, suivi de leur coalescence au cours de laquelle une certaine quantité d'eau se trouve momentanément emprisonnée dans la masse du liant, puis de l'expulsion de cette phase aqueuse. Au cours de la rupture, la viscosité du système, initialement comparable à celle de l'eau, évolue plus ou moins rapidement vers celle du liant définitif. Il en est tenu compte lors de la réalisation des enduits superficiels à l'émulsion (revêtements routiers connus sous le nom de gravillonnage) pour déterminer le moment de l'ouverture de l'ouvrage au trafic, le gain ultime de cohésion étant critique quant à la solidité de l'ouvrage. En revanche, lors de la réalisation d'enrobés à l'émulsion, le gain de cohésion est suffisamment important dès les premiers instants de l'opération pour provoquer la prise en masse du matériau, phénomène qui limite considérablement le délai de mise en oeuvre, et parfois même va jusqu'à bloquer les malaxeurs. La demanderesse vient maintenant de découvrir que lorsque l'émulsion bitumineuse est une émulsion mixte de deux liants noirs de viscosités différentes, le liant formé par la rupture spontanée de cette émulsion présente de façon inattendue une viscosité apparente en place plus faible que celle que l'on était en droit d'attendre pour le mélange des deux liants noirs. L'examen microscopique des films de rupture fournit quelques informations sur la raison de cet état de fait. Les figures 1 à 4 sont des images obtenues sous microscope Electroscan. La figure 1 représente une émulsion bitumineuse. Le liant dispersé y apparaît sous forme de sphères individuelles ; ; la figure n'est pas caractéristique du type de liant émulsionné. La figure 2 est l'image du film de rupture spontanée d'une émulsion de bitume dur. Il y a eu floculation des particules sans coalescence, ce qui les a amenées à prendre des formes polyédriques. Sur la figure 3, qui est l'image du film de rupture d'un bitume mou, les particules ont totalement perdu leur individualité, bien que de larges lacunes dans le film rappellent encore l'histoire récente de leur coalescence. La figure 4 est l'image du film de rupture d'une émulsion selon l'invention. On y voit de façon très caractéristique des particules sphériques individualisées engluées dans une masse sans structure apparente. Cette structure du film obtenu par rupture spontanée de l'émulsion selon l'invention, dans laquelle les particules sphériques sont manifestement constituées de bitume dur, et le liant amorphe, pour l'essentiel de bitume mou, en est une caractéristique observable. C'est à elle que l'on est en droit d'attribuer l'état initial de faible viscosité globale du liant. Ce film évolue spontanément, mais lentement vers la viscosité attendue; mais il est tout-à-fait intéressant d'observer que cette évolution est considérablement accélérée par application d'une action mécanique. Le demanderesse en a tiré les conséquences pour la réalisation d'enrobés à l'émulsion doués d'une raisonnable stockabilité.

La présente invention réside ainsi dans un procédé pour la réalisation d'enrobés à froid, en particulier d'enrobés denses stockables et de graves-émulsions par enrobage à froid avec une émulsion cationique mixte d'au moins deux liants noirs (accessoirement leurs équivalents clairs ou colorés pour travaux publics spéciaux) utilisés de viscosités différentes. L'un des liants est un liant choisi comme dur, l'autre comme mou et leurs proportions sont prises en conformité avec les lois connues qui régissent la viscosité de tels mélanges. Pour fixer les idées, on a considéré ici, en accord avec les conventions courantes de la profession, que les bitumes durs comprennent les bitumes de pénétrabilité 40/50 ou moins, et que les bitumes mous sont les bitumes de pénétrabilité 180/220 ou plus. C'est ainsi qu'on réalisera une émulsion de bitume équivalent à un bitume de pénétrabilité standard 80/100 à partir d'un bitume dur 20/30 ou 40/50 et d'un bitume mou de pénétrabilité 180/220. D'une façon générale il est préférable, pour augmenter la période de maniabilité de l'enrobé dense, d'augmenter la proportion de liant mou plutôt que d'accroître l'écart de viscosité entre les deux liants du mélange. Il s'avère toutefois qu'une très forte proportion de liant mou conduit à des enrobés dont le comportement au stockage n'est pas idéal. Un juste compromis se trouve avec des émulsions mixtes dont la teneur en liant mou initial est d'environ 15 à 45 %, le rapport de la viscosité du liant dur à celle du liant mou n'excédant pas 103. Le mode de calcul des proportions à prendre en compte est explicité plus bas, dans les exemples. Il conduit à limiter le choix des liants durs utilisés dans l'invention à des liants de pénétrabilité standard égale ou inférieure à 70, et celui des liants mous aux liants de pénétrabilité égale ou supérieure à 180. L'enrobage est réalisé dans les conditions habituelles, et l'enrobé résultant se présente à ce stade comme un enrobé de bitume mou. C'est sous l'action du pétrissage par les compacteurs à cylindres ou à pneus que l'enrobé prend les caractéristiques d'un enrobé de bitume dur.

Les émulsions cationiques de bitume, dont le mode de fabrication est bien connu de l'homme du métier, sont les émulsions préférées de l'invention, parce que leur rupture est consommée lors du malaxage ordinaire et qu'il n'y a plus ensuite de problème de perte de liant par essorage d'émulsion non rompue au stockage ou au cours du transport de l'enrobé à pied d'oeuvre; parce qu'aussi les qualités finales de l'enrobé, notamment sa résistance au désenrobage en place sont bien meilleures qu'avec tout autre type d'émulsions. Mais il est évident que l'invention s'applique aussi aux émulsions mixtes anioniques ou non ioniques lorsque la qualité des granulats et le mode d'enrobage en rendent l'utilisation possible.

Les émulsions mixtes, qui sont les moyens de l'invention, se réalisent très simplement par mélange en proportions convenables, d'une émulsion de bitume dur et d'une émulsion de bitume mou. On peut aussi, bien que ce soit un peu plus compliqué, utiliser l'émulsion d'un liant et la recycler comme phase aqueuse dans le moulin à émulsion pour l'enrichir avec le liant de l'autre type.

Les enrobés à froid auxquels on peut accéder grâce à la présente invention, comprennent les enrobés denses à froid au sens strict, dont les granulats s'inscrivent dans les fuseaux-types des formules semi-grenues pour enrobés à chaud, et les compositions connues sous le nom de graves-émulsions. Les fuseaux-types pour enrobés à chaud sont précisés dans la "Directive pour la Réalisation des Couches de Surface de Chaussées en Béton bitumineux", SETRA-LCPC, 1969; il leur correspond la composition suivante :

- fines : 6-9 %
- passant à 2 mm : 35-45 %
- passant à 6 mm : 60-70 %

Les graves-émulsions, qui sont également l'un des objets de la présente invention, sont définies dans la "Directive pour la Réalisation des Assises de Chaussées en Graves-Emulsions", SETRA-LCPC 1974. On les a rapprochées des enrobés denses à froid, parce qu'ils s'obtiennent par des techniques très voisines, et que leur pourcentage de vide est faible (<15 %).

Les enrobés denses à froid et les graves-émulsions obtenus par enrobage avec l'émulsion mixte de bitume dur et de bitume mou font évidemment partie de l'invention.

Bien qu'on en retire probablement moins d'avantages, la fabrication d'enrobés ouverts ou semi-ouverts avec des émulsions mixtes de liants dur et mou, fait partie de l'invention. De même, l'application de telles émulsions mixtes pour la réalisation d'enduits superficiels fait-elle partie de l'invention, pour l'amélioration du mouillage des gravillons par le film de liant et la formation de la mosaïque dès les premières passes du cylindrage.

EXEMPLES

Les six émulsions rapportées dans les exemples sont toutes des émulsions à 60 % de liant résiduel; elles ont été réalisées avec une turbine de type Emulbitume, en utilisant comme émulsifiant une polyamine (POLYRAM S, provenance CECA S.A.) à une teneur de 6 kg/tonne d'émulsion, le pH de la phase aqueuse étant ajusté à 2 par addition d'HCl. Les conditions de mise en émulsion sont celles qui sont habituellement pratiquées par l'homme du métier, en particulier, la température du liant est sa température dite d'équiviscosité 200 centistockes ($2m^2.s^{-1}$), et la température de la phase aqueuse est celle qui se déduit de la règle dite "des 200" (Voir P. Goulard, Technologie de fabrication des émulsions de bitume, Bull. Liaison Labo P.& Ch., Spécial W, juin 1974). Les liants utilisés dans les six émulsions ont les caractéristiques suivantes :

Tableau I

| CARACTERISTIQUES DES LIANTS UTILISES | | | |
|---|---|---|---|
| N° de l'émulsion | Pénétrabilité[1]Origine | Viscosité[2] du liant (pa.s) | Classement[3] |
| E1 | 20/30 Elf Feyzin | 96000 | D |
| E2 | 40/50 Elf Feyzin | 60000 | D |
| E3 (référence) | 80/100 Shell-Berre | 38000 | Intermédiaire |
| E4 | 180/220 Exxon | 7000 | M |
| E5 | <600[4] Elf Feyzin | 270 | M |
| E6 | <1000[5] | 0,974 | M |

[1] selon la norme AFNOR NFT-66004.

[2] Mesure effectuée sur un rhéomètre à contrainte imposée (fréquence = 1Hz, T° = 30°C) ; la correspondance entre les pénétrabilités et la viscosité exprimée en Pascal secondes est uniquement expérimental.

[3] D: "dur" et M : "mou"

[4] Ce liant est un résidu atmosphérique très peu visqueux.

[5] Le liant E6 n'est pas un liant bitumineux mais une huile de silicone. Sa viscosité est comparable à celle d'un fluxant du type bitume fluidifié (cut-back 0/1) mais non volatil. Il permet uniquement de compléter les exemples avec un cas de viscosité extrême.

Les émulsions mixtes sont composées de façon à ce que le liant résiduel global soit un liant de pénétrabilité 80/100 qui est reconnue comme la mieux adaptée pour la réalisation de couches de roulement. On suit pour cela la loi de viscosité des mélanges selon A.K. MEHROTRA (voir "A generalized viscosity mixing rule for blends of bitumen, bitumen fractions and liquid diluents", AIChE Symposium Series, N° 282, Vol. 87, pp 3642, ou "Mixing rules for predicting the viscosity of bitumens saturated with pure gases", The Canadian Journal of Chemical Engineering, Vol.70, feb. 1992, pp 165-172).

$$V = V_M^{aR} . V_D^{1-aR}$$

où V est la viscosité du mélange de a % de liant mou de viscosité $V_M$ et de 1-a % de liant dur de viscosité $V_D$. Pour les mélanges purement bitumineux, le coefficient R est pris égal à 0,75; pour les mélanges avec l'huile de silicone, ce coefficient R est pris égal à 0,55.

Les émulsions présentées dans les exemples sont :

- l'émulsion E3 de bitume 80/100 (référence),
- l'émulsion E7 constituée de 55 % de E1 et de 45 % de E4,
- l'émulsion E8 constituée de 80 % de E1 et de 20 % de E5,
- l'émulsion E9 constituée de 85 % de E1 et de 15 % de E6,
- l'émulsion E10 constituée de 88 % de E2 et de 12 % de E5,
- l'émulsion E11 constituée de 90 % de E2 et de 10 % de E6,

Les enrobés présentés dans les exemples 1 à 3 sont des enrobés denses à froid au sens strict, dont le fuseau granulométrique est celui d'un enrobé à chaud semi-grenu.

La composition granulométrique correspondante est obtenue par mélange de trois fractions granulaires aux proportions suivantes : 40 % de 0/2, 25 % de 2/6 et 35 % de 6/10 pour la diorite de Meilleraie et la quartzite de Vignats. 300 g de ces granulats secs (24 h à 80°C) sont mis en contact avec 30 g d'émulsion de bitume dans un malaxeur pendant 3 minutes pour obtenir un enrobage satisfaisant.

L'enrobé présenté dans l'exemple 4 est une grave-émulsion dont la composition est rapportée à l'endroit de l'exemple.

Les tests présentés dans les exemples sont les suivants :

Test rhéologique pour apprécier la montée en cohésion du film de liant obtenu par rupture de l'émulsion mixte

La viscosité d'un film d'émulsion d'épaisseur 200 µm est mesurée au cours du temps à l'aide d'un rhéomètre à contrainte imposée. Pour cela, on place 250 microlitres d'émulsion sur le plan de mesure du rhéomètre, et le mobile de cisaillement, en l'occurrence une pastille circulaire perforée de 2 cm de diamètre, vient se poser automatiquement à 200 µm de distance de ce plan, créant ainsi un entrefer de dimensions bien définies occupé d'abord par l'émulsion, puis par le film de liant qui résulte de sa rupture et de l'élimination progressive de l'eau à travers le mobile. Le mobile de l'appareil est animé d'oscillations qu'il transmet au film de liant; la déformation résultante est enregistrée et on en déduit les caractéristiques rhéologiques du matériau. Cette mesure permet la détermination de la viscosité du film et son évolution sur la durée de l'essai (4 heures). Les mesures sont réalisées à 30°C et à 40 % d'humidité relative et permettent d'évaluer la cohésion ou encore la "maniabilité" du film déposé. Après les 4 heures de vieillissement, le film est "compacté" et sa viscosité est à nouveau mesurée au rhéomètre. Ce compactage est réalisable mécaniquement en soumettant le film d'émulsion à un écrasement vertical accompagné d'un cisaillement tangentiel obtenu en appliquant pendant deux minutes environ au mobile de cisaillement une charge d'un kilogramme environ et en lui imposant en même temps une rotation d'un tour par minute; on peut procéder manuellement d'une façon qui s'est avérée tout aussi fiable et reproductible, en écrasant le film avec le plat d'une spatule et en lui imposant un mouvement tournant. Le rapport de la viscosité du film après compactage à la viscosité du film à 4 h permet de caractériser le gain de cohésion dû au compactage.

Test de maniabilité de l'enrobé dense à froid

L'enrobé est placé immédiatement après enrobage dans un cylindre vertical (diamètre interne : 5 cm, hauteur : 8 cm) qui permet une évaporation lente grâce à plusieurs orifices distribués sur ses bords; il est chargé d'un piston qui lui applique une pression axiale de 50 kPa, qui simule le compactage qui s'opère spontanément au coeur d'un tas d'enrobés. Tout l'essai se déroule à la température ambiante de 21°C, hygrométrie 40 %. On démoule avec précaution les carottes d'enrobé (d'environ 8 cm de long), obtenues respectivement après 1,5, 4 ou 16,5 heures de stockage sous charge, on les place horizontalement sur le plateau inférieur de la presse, et on les soumet à un écrasement diamétral à la vitesse de 2 mm/min. La résistance à l'écrasement est enregistrée.

Test de performance mécanique de l'enrobé dense à froid

On a retenu ici l'essai de compression simple sur enrobé hydrocarboné dit "essai DURIEZ " pour lequel on renvoie au mode opératoire officiel, éditions DUNOD, juin 1979. L'essai comprend la détermination de trois grandeurs : (1) la résistance à la compression, (2) le rapport immersion-compression et (3) la compacité. Les spécifications habituellement retenues pour des enrobés denses à froid ayant une teneur en eau totale de 7 % ainsi qu'une ossature minérale et une teneur en bitume 80/100 comparable à celle des enrobés à chaud (voir Directive LCPC-SETRA 1969, déjà citée) sont les suivantes :

- (1) résistance à la compression à 18°C : Rc> $45.10^5$ Pa ;
- (2) rapport de la résistance à la compression à sec à la résistance à la compression après immersion, dit "rapport immersion-compression", qui permet d'évaluer la nocivité de l'eau sur le mélange : I/C >0,7 ;
- (3) compacité (LCPC) > 90 %.

EXEMPLE 1

L'exemple illustre l'évolution de la viscosité des films de liant obtenus par rupture d'émulsion mixte. Les résultats sont consignés dans le tableau II ci-après.

Tableau II

| VISCOSITES (PA.S) COMPAREES DE FILMS DE RUPTURE D'EMULSIONS | | | | |
|---|---|---|---|---|
| Emulsion n° | Viscosité à 4 heures | Viscosité après "compactage" | | Gain de viscosité |
| | | mesurée | attendue | |
| E3 | 27800 | 35230 | 38000 | 1,26 |
| E7 | 19020 | 36100 | 39600 | 1,89 |
| E8 | 14460 | 35750 | 38000 | 2,47 |
| E9 | 22650 | 34100 | 37100 | 1,5 |
| E10 | 19800 | 36400 | 37000 | 1,84 |
| E11 | 28320 | 30210 | 32700 | 1,06 |

Toutes les viscosités des liants obtenus par un certain travail mécanique du film convergent vers les 38000 Pa.s attendus pour un bitume recomposé pour être un 80/100. Mais celles que l'on mesure sur le liant obtenu par rupture spontanée de l'émulsion s'en écartent plus ou moins, l'écart étant particulièrement prononcé pour les mélanges de bitume dur et de bitume mou.

EXEMPLE 2

Prise de cohésion de l'enrobé au cours du stockage sous charge. L'interprétation des courbes d'écrasement diamétral de carottes d'enrobés de diorite de la Meilleraie et de quartzite de Vignats est donnée dans le tableau III ci-après, où apparaissent les résistances à la compression diamétrale exprimées en bars ($10^5$ Pascals). Les enrobés à l'émulsion n°3 sont pris comme référence.

Tableau III

| EVOLUTION DE LA COHESION D'ENROBES DENSES AU COURS DU STOCKAGE | | | | | | |
|---|---|---|---|---|---|---|
| Emulsion n° | Meilleraie | | | Vignats | | |
| | stockage (heures) | | | stockage (heures) | | |
| | 1 | 4 | 16,5 | 1 | 4 | 16,5 |
| E3 | 3 | 5,25 | 9 | 0,35 | 1,38 | 5,5 |
| E7 | 1 | 1,15 | 1,75 | 0 | 0,58 | 1,38 |
| E8 | 0 | 1,25 | 1,38 | 0 | 0 | 0,38 |

Tableau III   (suite)

| EVOLUTION DE LA COHESION D'ENROBES DENSES AU COURS DU STOCKAGE | | | | | | |
|---|---|---|---|---|---|---|
| Emulsion n° | Meilleraie | | | Vignats | | |
| | stockage (heures) | | | stockage (heures) | | |
| | 1 | 4 | 16,5 | 1 | 4 | 16,5 |
| E9 | 1,5 | 2,75 | 2,88 | 0 | 0,75 | 2 |
| E10 | 1,25 | 1,5 | 2,5 | 0 | 0,85 | 1,25 |
| E11 | 1,5 | 2,25 | 3 | 0 | 0,88 | 1,75 |

On constate que la prise de cohésion au stockage est fortement influencée par le mode de réalisation du liant, les enrobés réalisés avec des liants purement bitumineux suivant en cela assez bien le comportement en viscosité relevé dans l'essai précédent.

EXEMPLE 3

On effectue un contrôle de la qualité d'enrobés denses à froid par essai DURIEZ. Les enrobés sont réalisés par enrobage à l'émulsion de diorite de la Meilleraie et de quartzite de Vignats et moulés en moules DURIEZ immédiatement après l'enrobage.

Les résultats de l'essai sont reportés dans le TABLEAU IV ci-dessous, avec valeurs de la résistance à la compression en bars ($10^5$ Pascals); l'émulsion n°3 y est considérée comme l'émulsion de référence. Les enrobés exécutés avec l'émulsion n°3 sont pris comme référence.

Tableau IV

| CARACTERISTIQUES DURIEZ DES ENROBES | | | | | | |
|---|---|---|---|---|---|---|
| Emulsion n° | Meilleraie | | | Vignats | | |
| | Rc | I/C | C % | Rc | I/C | C% |
| E3 | 64 | 0,82 | 91,5 | 52 | 0,84 | 91,8 |
| E7 | 69 | 0,85 | 91,8 | 57 | 0,83 | 92,1 |
| E8 | 65 | 0,81 | 92,1 | 51 | 0,81 | 92,5 |
| E9 | 63 | 0,80 | 93,6 | 54 | 0,78 | 92,8 |
| E10 | 64 | 0,83 | 91,9 | 53 | 0,84 | 91,2 |
| E11 | 57 | 0,78 | 91,3 | 48 | 0,8 | 91,5 |

On lit sur ce tableau que les caractéristiques finales des enrobés sont insensibles, à la dispersion près des résultats, au mode de réalisation des compositions à même viscosité qui constituent les liants de ces enrobés.

EXEMPLE 4

L'enrobé de cet exemple est du type grave-émulsion. La composition granulométrique correspondante est obtenue par mélange de trois fractions granulaires aux proportions suivantes : 60 % de 0/6, 15 % de 6/10 et 15 % de 10/14 en diorite de Meilleraie. L'émulsion E12, réalisée selon la règle de mélange décrite précédemment est constituée de 50% d'émulsion E2 et de 50% d'émulsion E5, afin d'obtenir un liant résiduel final de pénétrabilité 180/200. 300 g de ces granulats secs (24 h à 80°C) sont mis en contact avec 25,5 g d'émulsion de bitume dans un malaxeur pendant 3 minutes pour obtenir un enrobage satisfaisant (liant résiduel = 4,8%).

L'ensemble des tests décrits dans les exemples précédents a été effectué avec l'émulsion E12 et mis en comparaison avec l'émulsion E4 à base de bitume 180/220, qui sert ici de référence. Ce sont:

a) le test rhéologique pour apprécier la montée en cohésion du film de liant obtenu par rupture de l'émulsion mixte (tableau V);
b) le test d'évolution de la cohésion de la grave-émulsion au cours du stockage (tableau VI);

c) les caractéristiques Duriez de la grave-émulsion (tableau VI).

Tableau V

| VISCOSITES (PA.S) COMPAREES DE FILMS DE RUPTURE D'EMULSIONS | | | | |
|---|---|---|---|---|
| Emulsion n° | Viscosité à 4 heures | Viscosité après "compactage" | | Gain de viscosité |
| | | mesurée | attendue | |
| E12 | 3700 | 6700 | 7000 | 1,8 |
| E4 | 6580 | 6800 | 7000 | 1,04 |

Tableau VI

| EVOLUTION DE LA COHESION D'UNE GRAVE-EMULSION AU COURS DU STOCKAGE | | | |
|---|---|---|---|
| Emulsion n° | Cohésion (kg) après | | |
| | stockage (heures) | | |
| | 1 | 16,5 | 1 |
| E12 | 0 | 1,2 | 0,35 |
| E4 | 1,8 | 6 | 0 |

Tableau VII

| CARACTERISTIQUES DURIEZ D'UNE GRAVE-EMULSION | | | |
|---|---|---|---|
| Emulsion n° | Meilleraie | | |
| | Rc* | I/C | C % |
| E12 | 25 | 0,85 | 88 |
| E4 | 28 | 0,77 | 86 |

*Résistances en bars.

Ces caractéristiques "'Duriez" satisfont aux exigences de la Directive Graves-émulsions (référence déjà citée). Ces résultats confirment les avantages apportés par l'utilisation selon l'invention d'une émulsion mixte :

- gain de cohésion au compactage (tableau V),
- gain de maniabilité dans le temps (Tableau VI),
- bonne tenue mécanique des enrobés et rapport I/C témoignant d'une amélioration de la tenue à l'eau (Tableau VII),
- compacité finale satisfaisante.

**Revendications**

1. Procédé pour l'obtention d'enrobés à froid par enrobage d'une composition granulométrique avec une émulsion bitumineuse cationique, caractérisé en ce que ladite émulsion est une émulsion cationique mixte de liant dur et de liant mou.

2. Procédé pour l'obtention d'enrobés selon la revendication 1, caractérisé en ce que le liant dur est un bitume de pénétrabilité standard égale ou inférieure à 70, et que le liant mou est un bitume de pénétrabilité standard égale ou supérieure à 180.

3. Procédé pour l'obtention d'enrobés selon l'une ou l'autre des revendications 1 ou 2, caractérisé en ce que la proportion de liant mou dans l'émulsion cationique mixte est comprise entre 15 et 45 %, et que le rapport des viscosités du liant dur au liant mou est tout au plus égal à $10^3$.

**4.** Procédé selon l'une ou l'autre des revendications 1 à 3 appliqué à l'obtention d'enrobés denses à froid stockables.

**5.** Procédé selon l'une ou l'autre des revendications 1 à 3 appliqué à l'obtention de graves-émulsions.

**Patentansprüche**

**1.** Verfahren zur Herstellung von Kaltmischgut durch Überziehen (Beschichten) einer Kornzusammensetzung mit einer bituminösen kationischen Emulsion, dadurch gekennzeichnet, daß die Emulsion eine kationische Mischemulsion aus hartem Bindemittel und weichem Bindemittel ist.

**2.** Verfahren zur Herstellung von Mischgut nach Anspruch 1, dadurch gekennzeichnet, daß der harte Binder ein Bitumen mit einer Standarddurchlässigkeit (Standarddurchdringbarkeit) von 70 oder weniger ist und der weiche Binder ein Bitumen mit einer Standarddurchlässigkeit (Standarddurchdringbarkeit) von 180 oder mehr ist.

**3.** Verfahren zur Herstellung von Mischgut nach Anspruch 1 oder 2, dadurch gekennzeichnet, daß die Menge an weichem Bindemittel in der kationischen Mischemulsion zwischen 15 und 45 % liegt und das Verhältnis der Viskositäten von hartem Bindemittel zu weichem Bindemittel allerhöchstens $10^3$ beträgt.

**4.** Verfahren nach einem der Ansprüche 1 bis 3, angewandt zur Herstellung von lagerfähigem, kaltem, dichtem Mischgut.

**5.** Verfahren nach einem der Ansprüche 1 bis 3, angewandt zur Herstellung schwerer Emulsionen.

**Claims**

**1.** Process for obtaining cold bituminous mixes by coating a granulometric composition with a cationic bituminous emulsion, characterized in that the said emulsion is a mixed hard binder/soft binder cationic emulsion.

**2.** Process for obtaining bituminous mixes according to Claim 1, characterized in that the hard binder is a bitumen having a standard penetrability equal to or less than 70, and in that the soft binder is a bitumen having a standard penetrability equal to or greater than 180.

**3.** Process for obtaining bituminous mixes according to either of Claims 1 and 2, characterized in that the proportion of soft binder in the mixed cationic emulsion is between 15 and 45%, and in that the ratio of the viscosity of the hard binder to the viscosity of the soft binder is at the very most equal to $10^3$.

**4.** Process according to any one of Claims 1 to 3, applied to the production of storable cold dense bituminous mixes.

**5.** Process according to any one of Claims 1 to 3, applied to the production of emulsion-stabilized gravel.

## FIGURE 1

FIGURE 2

FIGURE 3

FIGURE 4